# EUROPÄISCHE PATENTSCHRIFT

(11) **EP 4 293 957 B1**
(45) Veröffentlichungstag und Bekanntmachung des Hinweises auf die Patenterteilung: **04.06.2025**
(21) Anmeldenummer: 22179356.5
(22) Anmeldetag: 16.06.2022
(51) Int. Cl.: H04L 9/40, H04L 9/32, G06F 21/71, H04L 9/06

(54) **VERFAHREN UND ANORDNUNG ZUM ERZEUGEN EINES STEUERSIGNALS**
METHOD AND ASSEMBLY FOR CREATING A CONTROL SIGNAL
PROCÉDÉ ET DISPOSITIF DE GÉNÉRATION D'UN SIGNAL DE COMMANDE

(43) Veröffentlichungstag der Anmeldung: 20.12.2023
(73) Patentinhaber: Siemens Mobility GmbH, 81739 München (DE)
(72) Erfinder: Grabe, Wolfgang, 38154 Königslutter (DE); Gückel, Hartmut, 31228 Peine (DE)
(74) Vertreter: Siemens Patent Attorneys

(56) Entgegenhaltungen:
- WO-A1-03/047937
- WO-A1-2014/090530
- DE-A1- 102018 203 072
- US-A1- 2018 367 304
- GUO HUAQUN ET AL: "Protecting Train Balise Telegram Data Integrity", 2018 21ST INTERNATIONAL CONFERENCE ON INTELLIGENT TRANSPORTATION SYSTEMS (ITSC), IEEE, 4 November 2018 (2018-11-04), pages 806 - 811, XP033470223, ISBN: 978-1-7281-0321-1, [retrieved on 20181207], DOI: 10.1109/ITSC.2018.8569616

## Beschreibung

Die Erfindung bezieht sich auf Verfahren und Anordnungen zum Erzeugen von Steuersignalen, mit denen sich beispielsweise ein Aussenden eines Datentelegramms freigeben oder blockieren lässt und/oder ein Speichern von Daten freigeben oder blockieren lässt.

Aus der europäischen Patentschrift EP 3 659 317 B1 ist ein Verfahren zum Erzeugen eines Steuersignals bekannt, mit dem sich ein Aussenden eines Datentelegramms verhindern lässt. Im Detail beschreibt die Veröffentlichungsschrift ein Verfahren zum Bereitstellen eines sicheren Telegramms mit einem Nutzdaten aufweisenden Nutzdatenteil und einem Prüfdatenteil, wobei der Prüfdatenteil unverfälschte Originalnutzdaten repräsentiert. Die Originalnutzdaten werden in einer sicheren Softwareumgebung gespeichert. Eine Nutzdatenkopie der Originalnutzdaten wird außerhalb der sicheren Softwareumgebung gespeichert. Der Prüfdatenteil mit Originalprüfdaten wird in der sicheren Softwareumgebung oder außerhalb der sicheren Softwareumgebung erzeugt, und eine Prüfdatenkopie der Originalprüfdaten wird außerhalb der sicheren Softwareumgebung gespeichert, wenn der Prüfdatenteil in der sicheren Softwareumgebung erzeugt wurde. Eine Kopie der Nutzdatenkopie wird in der sicheren Softwareumgebung mit den Originalnutzdaten und/oder einer Repräsentation der Originalnutzdaten verglichen, und/oder es wird eine Kopie der Prüfdatenkopie in der sicheren Softwareumgebung mit den Originalprüfdaten und/oder der Repräsentation der Originalprüfdaten verglichen. Das Telegramm wird mit der Nutzdatenkopie als Nutzdaten und dem Prüfdatenteil erst bereitgestellt, wenn der Vergleich ergeben hat, dass die Kopie der Nutzdatenkopie den Originalnutzdaten entspricht und/oder die Kopie der Prüfdatenkopie den Originalprüfdaten entspricht.

Das Dokument WO 03/047937 A1 beschreibt ein Verfahren zur Steuerung eines sicherheitskritischen Eisenbahnbetriebsprozesses, bei dem das hierfür erforderliche Programm in eine Systemsoftware und eine eisenbahnbetriebsspezifische Software aufgeteilt wird. Externe Befehle und Meldungen, welche die Steuerung betreffen, werden erfasst und mittels der in einem oder mehreren sicheren Signalisierungsrechnern laufenden Systemsoftware, entsprechend der jeweiligen Eisenbahnbetriebsbedingung, an kommerzielle Rechner übermittelt, in denen die eigentliche Prozesssteuerung abläuft.

Das Dokument WO 2014/090530 A1 betrifft eine Anordnung umfassend einen Aktor, mindestens eine Sendeeinrichtung zum Senden von Steuertelegrammen, die jeweils einen vordefinierten Steuerbefehlen für den Aktor enthalten oder selbst den vordefinierten Steuerbefehl darstellen, mindestens zwei Empfangseinrichtungen zum Empfangen der Steuertelegramme und Erzeugen eines Steuersignals für den Aktor, und eine Entscheidereinrichtung, die die Empfangseinrichtungen mit dem Aktor verbindet und die dem Aktor die Umsetzung der Steuersignale der Empfangseinrichtungen nur dann mittels eines Freigabesignals erlaubt, wenn das Steuersignal von allen Empfangseinrichtungen oder von mindestens einer vordefinierten Mindestanzahl von Empfangseinrichtungen vorliegt.

Das Dokument DE 10 2018 203072 A1 bezieht sich auf ein Verfahren zum Übertragen einer Nachricht von einer Sendeeinrichtung zu einer Empfangseinrichtung. Ein von der Sendeeinrichtung erzeugtes Telegramm, das die Nachricht und mit der Nachricht gebildete Prüfdaten umfasst, wird zu einer senderseitigen Zugriffsschutzeinrichtung übertragen, die senderseitige Zugriffsschutzeinrichtung modifiziert das Telegramm und übermittelt dieses anschließend über eine Verbindung zu einer empfängerseitigen Zugriffsschutzeinrichtung.

Der Erfindung liegt die Aufgabe zugrunde, ein anderes Verfahren zum Erzeugen eines Steuersignals anzugeben, mit dem sich Fehler bei einem Aussenden eines Datentelegramms in der Prozesskette besonders zuverlässig erkennen lassen und somit besonders hohe Sicherheitslevel erreichen lässt.

Diese Aufgabe wird erfindungsgemäß durch ein Verfahren mit den Merkmalen gemäß Patentanspruch 1 gelöst; vorteilhafte Ausgestaltungen des erfindungsgemäßen Verfahrens sind in Unteransprüchen angegeben.

Danach ist erfindungsgemäß vorgesehen, dass mit Originalnutzdaten und/oder auf den Originalnutzdaten beruhenden Prüfdaten Sicherungsdaten gebildet werden, ein Sicherungsanhang erzeugt und dieser den Sicherungsdaten unter Bildung erweiterter Sicherungsdaten hinzugefügt wird, die erweiterten Sicherungsdaten ausgewertet werden und das Steuersignal in Abhängigkeit davon erzeugt wird, ob der in den erweiterten Sicherungsdaten enthaltene Sicherungsanhang mit den in den erweiterten Sicherungsdaten enthaltenen Sicherungsdaten korreliert, wobei die oben genannten Schritte in einem oder mehreren sicheren Abschnitten einer Rechenanlage durchgeführt werden.

Ein wesentlicher Vorteil des erfindungsgemäßen Verfahrens besteht darin, dass durch den Einbezug erweiterter Sicherungsdaten bzw. durch die Berücksichtigung des Sicherungsanhangs eine besonders sichere Überprüfung der Integrität der Originalnutzdaten und/oder der Prüfdaten ermöglicht wird und etwaige Fehler in der Prozessabfolge zuverlässig erkannt werden können.

Die Prüfung, ob eine Korrelation bzw. ein Korrespondieren zwischen Sicherungsanhang und Sicherungsdaten vorliegt bzw. der Sicherungsanhang und die Sicherungsdaten inhaltlich zusammenpassen, - nachfolgend wird diese Prüfung auch Korrelationsprüfung genannt - wird vorzugsweise in Abhängigkeit davon durchgeführt, wie die Sicherungsdaten und der Sicherungsanhang erstellt worden sind: Sind beispielsweise die in den erweiterten Sicherungsdaten enthaltenen Sicherungsdaten unverschlüsselt und wurde der Sicherungsanhang durch Verschlüsseln der Sicherungsdaten erstellt, so kann die Korrelationsprüfung erfolgen, indem die Sicherungsdaten - mit demselben Verschlüsselungsverfahren, mit dem der Sicherungsanhang erstellt wurde, oder einem im fehlerfreien Falle dasselbe Ergebnis liefernden anderen Verschlüsselungsverfahren - nochmals verschlüsselt werden und die verschlüsselten Sicherungsdaten und der Sicherungsanhang verglichen werden und auf eine Korrelation geschlossen wird, wenn die verschlüsselten Sicherungsdaten und der Sicherungsanhang identisch sind.

Vorteilhaft ist es, wenn die Sicherungsdaten die Originalnutzdaten und/oder die Prüfdaten enthalten und das Steuersignal in Abhängigkeit davon erzeugt wird, ob der in den erweiterten Sicherungsdaten enthaltene Sicherungsanhang mit den in den Sicherungsdaten enthaltenen Originalnutzdaten und/oder den in den Sicherungsdaten enthaltenen Prüfdaten korreliert (bzw. korrespondiert, also inhaltlich zu diesen passt).

Erfindungsgemäß ist außerdem vorgesehen, dass ein Telegrammerzeugungsmodul mit den erweiterten Sicherungsdaten ein Zwischentelegramm bildet, das einen Nutzdatenabschnitt und einen Sicherungsabschnitt umfasst, wobei die Sicherungsdaten als Nutzdateninhalt dem Nutzdatenabschnitt zugefügt werden und der Sicherungsanhang dem Sicherungsabschnitt zugefügt wird, das Zwischentelegramm zu einem Telegrammempfangsmodul weitergeleitet wird, das Telegrammempfangsmodul das von dem Telegrammerzeugungsmodul erzeugte Zwischentelegramm empfängt und die darin enthaltenen erweiterten Sicherungsdaten auswertet und das Telegrammempfangsmodul das Steuersignal in Abhängigkeit davon erzeugt, ob der Nutzdateninhalt und der Sicherungsanhang korrespondieren, wobei das Telegrammerzeugungsmodul und das Telegrammempfangsmodul in dem oder den oben genannten sicheren Abschnitten der Rechenanlage integriert sind. Durch die erfindungsgemäß vorgesehenen Schritte eines Erzeugens eines Zwischentelegramms, Empfangen des Zwischentelegramms und Auswerten des Zwischentelegramms lassen sich Fehler in der Prozesskette besonders zuverlässig erkennen und somit besonders hohe Sicherheitslevel erreichen.

Erfindungsgemäß ist außerdem vorgesehen, dass das Telegrammempfangsmodul ein datentelegrammbezogenes Freigabesignal erzeugt, das ein Aussenden eines Datentelegramms freigibt, wenn der Nutzdateninhalt und der Sicherungsanhang korrespondieren, und ein datentelegrammbezogenes Blockiersignal erzeugt, das ein Aussenden des Datentelegramms blockiert, wenn der Nutzdateninhalt und der Sicherungsanhang nicht korrespondieren.

Die Prüfung, ob eine Korrelation bzw. ein Korrespondieren zwischen Sicherungsanhang und Nutzdateninhalt vorliegt bzw. der Sicherungsanhang und der Nutzdateninhalt inhaltlich zusammenpassen, - nachfolgend wird diese Prüfung auch Nutzdatenkorrelationsprüfung genannt - wird vorzugsweise in Abhängigkeit davon durchgeführt, wie der Nutzdateninhalt und der Sicherungsanhang erstellt worden sind: Sind beispielsweise die Sicherungsdaten im Nutzdateninhalt unverschlüsselt und wurde der Sicherungsanhang durch Verschlüsseln des Nutzdateninhalts erstellt, so kann die Nutzdatenkorrelationsprüfung erfolgen, indem mit demselben Verschlüsselungsverfahren, mit dem auch der Sicherungsanhang erstellt wurde, oder mit einem im fehlerfreien Falle dasselbe Ergebnis liefernden anderen Verschlüsselungsverfahren der Nutzdateninhalt nochmals verschlüsselt wird und der verschlüsselte Nutzdateninhalt und der Sicherungsanhang verglichen werden und auf eine Korrelation geschlossen wird, wenn der verschlüsselte Nutzdateninhalt und der Sicherungsanhang identisch sind.

Die zuletzt beschriebene Verfahrensvariante lässt sich in einfacher Weise und damit besonders vorteilhaft beispielsweise mit dem im SIMATIC Safety System der Fa. SIEMENS zur Verfügung stehenden Telegramm-Standard PROFIsafe realisieren, sodass der Programmieraufwand zur Durchführung des beschriebenen Verfahrens minimiert wird.

Das Telegrammerzeugungsmodul wird vorzugsweise durch eine flexible F-Link Telegrammsendeeinrichtung des SIMATIC Safety Systems der Fa. SIEMENS gebildet.

Das Telegrammempfangsmodul wird vorzugsweise durch eine flexible F-Link Telegrammempfangseinrichtung des SIMATIC Safety Systems der Fa. SIEMENS gebildet.

Bei den Sicherungsdaten, die dem Nutzdatenabschnitt zugefügt werden, kann es sich in vorteilhafter Weise um die Originalnutzdaten und/oder die auf den Originalnutzdaten beruhenden Prüfdaten als solche handeln.

Auch ist es von Vorteil, wenn das Telegrammempfangsmodul als Steuersignal oder als weiteres Steuersignal ein speicherdatenbezogenes Freigabesignal erzeugt, das ein Speichern von Daten freigibt, wenn der Nutzdateninhalt und der Sicherungsanhang korrespondieren, und/oder ein speicherdatenbezogenes Blockiersignal erzeugt, das ein Speichern von Daten blockiert, wenn der Nutzdateninhalt und der Sicherungsanhang nicht korrespondieren.

Darüber hinaus wird es als vorteilhaft angesehen, wenn das Telegrammerzeugungsmodul mit Referenznutzdaten, die in dem sicheren Abschnitt oder einem der sicheren Abschnitte vorliegen und sich von den Originalnutzdaten unterscheiden und getrennt von den Originalnutzdaten erzeugt worden sind, aber im fehlerfreien Falle mit den Originalnutzdaten vom Dateninhalt her identisch sind, und/oder mit auf den Referenznutzdaten beruhenden Referenzprüfdaten den Sicherungsanhang erzeugt und diesen referenzdatenbezogenen Sicherungsanhang dem Sicherungsabschnitt zufügt.

Das Telegrammempfangsmodul erzeugt das Steuersignal oder zumindest eines der Steuersignale vorzugsweise in Abhängigkeit davon, ob der auf den Originaldaten beruhende Nutzdateninhalt und der referenzdatenbezogene Sicherungsanhang korrespondieren.

Die Prüfung, ob eine Korrelation bzw. ein Korrespondieren zwischen dem auf den Originaldaten beruhenden Nutzdateninhalt und dem referenzdatenbezogenen Sicherungsanhang vorliegt bzw. der Sicherungsanhang und der Nutzdateninhalt inhaltlich zusammenpassen, wird vorzugsweise in Abhängigkeit davon durchgeführt, wie der Nutzdateninhalt und der Sicherungsanhang erstellt worden sind: Ist beispielsweise der auf den Originaldaten beruhende Nutzdateninhalt unverschlüsselt und ist der referenzdatenbezogene Sicherungsanhang verschlüsselt, so kann der referenzdatenbezogene Sicherungsanhang zunächst entschlüsselt werden und es kann der unverschlüsselte Nutzdateninhalt mit dem entschlüsselten Sicherungsanhang inhaltlich verglichen werden und auf eine Korrelation geschlossen werden, wenn der unverschlüsselte Nutzdateninhalt und der entschlüsselte Sicherungsanhang identisch sind. Alternativ kann der Nutzdateninhalt mit demselben Verschlüsselungsverfahren, mit dem auch der Sicherungsanhang erstellt wurde, oder mit einem im fehlerfreien Falle dasselbe Ergebnis liefernden anderen Verschlüsselungsverfahren verschlüsselt werden und es kann der verschlüsselte Nutzdateninhalt und der verschlüsselte Sicherungsanhang verglichen werden und auf eine Korrelation geschlossen werden, wenn der verschlüsselte Nutzdateninhalt und der verschlüsselte Sicherungsanhang identisch sind.

Bei einer ersten als besonders vorteilhaft angesehenen Variante ist vorgesehen, dass das Telegrammerzeugungsmodul die Originalnutzdaten und die Prüfdaten zu dem Nutzdatenabschnitt des Zwischentelegramms hinzufügt und den Sicherungsanhang durch Anwendung einer Sicherungsfunktion bildet, indem es die Sicherungsfunktion auf die Referenznutzdaten und die Referenzprüfdaten anwendet.

Bei einer zweiten als besonders vorteilhaft angesehenen Variante ist vorgesehen, dass das Telegrammerzeugungsmodul die Originalnutzdaten, aber nicht die Prüfdaten, zu dem Nutzdatenabschnitt des Zwischentelegramms hinzufügt und den Sicherungsanhang durch Anwendung einer Sicherungsfunktion bildet, indem es die Sicherungsfunktion auf die Referenznutzdaten anwendet.

Bei einer dritten als besonders vorteilhaft angesehenen Variante ist vorgesehen, dass das Telegrammerzeugungsmodul die Prüfdaten, aber nicht die Originalnutzdaten, zu dem Nutzdatenabschnitt des Zwischentelegramms hinzufügt und den Sicherungsanhang durch Anwendung einer Sicherungsfunktion bildet, indem es die Sicherungsfunktion auf die Referenzprüfdaten anwendet.

Bei allen Verfahrensvarianten kann in vorteilhafter Weise vorgesehen sein, mit Referenznutzdaten, die in dem sicheren Abschnitt oder in einem der sicheren Abschnitte vorliegen und sich von den Originalnutzdaten unterscheiden und getrennt von den Originalnutzdaten erzeugt worden sind, aber im fehlerfreien Falle mit den Originalnutzdaten vom Dateninhalt her identisch sind, und/oder mit auf den Referenznutzdaten beruhenden Referenzprüfdaten der Sicherungsanhang erzeugt wird, und das Steuersignal in Abhängigkeit davon erzeugt wird, ob der auf den Originaldaten beruhende Nutzdateninhalt und der referenzdatenbezogene Sicherungsanhang korrespondieren.

Die Anwendung der Sicherungsfunktion umfasst vorzugsweise zumindest auch die Bildung eines zyklischen Redundanzcodes, der dem Sicherungsanhang zugefügt wird.

Die beschriebenen Verfahrensschritte werden vorzugsweise ausschließlich in einem oder mehreren durch Softwareprogrammierung und/oder Hardwaresicherung sicheren Abschnitten einer Rechenanlage ausgeführt werden.

Vorteilhaft ist es, wenn die oben aufgeführten Verfahrensschritte auf zumindest zwei unabhängig voneinander sicher arbeitende Softwareabschnitte aufgeteilt sind. Insbesondere ist es von Vorteil, wenn das Telegrammerzeugungsmodul und das Telegrammempfangsmodul unterschiedlichen sicher arbeitenden Softwareabschnitten zugeordnet sind.

Bezüglich des Datentelegramms, dessen Aussenden von dem Freigabesignal freigegeben oder von dem Blockiersignal blockiert wird, wird es als vorteilhaft angesehen, wenn dieses in einem nichtsicheren Abschnitt der Rechenanlage fertiggestellt wird, wobei die Originalnutzdaten und/oder die Referenznutzdaten einem Nutzdatenabschnitt des Datentelegramms zugefügt werden, und wobei die Prüfdaten und/oder die Referenzprüfdaten dem Sicherungsabschnitt des Datentelegramms zugefügt werden.

Die Erfindung bezieht sich außerdem auf eine Rechenanlage. Erfindungsgemäß ist bezüglich der Rechenanlage vorgesehen, dass diese derart programmiert ist, dass sie ein Verfahren wie oben beschrieben ausführen kann.

Bezüglich der Vorteile der erfindungsgemäßen Rechenanlage und deren vorteilhafter Ausgestaltungen sei auf die obigen Ausführungen im Zusammenhang mit dem erfindungsgemäßen Verfahren und dessen vorteilhafter Ausgestaltungen verwiesen.

Die Rechenanlage kann zwei oder mehr Rechnereinheiten umfassen, auf die die Verfahrensschritte des Verfahrens aufgeteilt sind und die die Verfahrensschritte gemeinsam ausführen.

Die Erfindung bezieht sich außerdem auf eine eisenbahntechnische Komponente, insbesondere ein Schienenfahrzeug oder eine Eisenbahnstreckeneinrichtung. Erfindungsgemäß ist bezüglich der eisenbahntechnischen Komponente vorgesehen, dass diese eine Rechenanlage, wie oben beschrieben, aufweist oder ein erfindungsgemäßes Verfahren, wie oben beschrieben, ausführen kann.

Bezüglich der Vorteile der eisenbahntechnischen Komponente und deren vorteilhafter Ausgestaltungen sei auf die obigen Ausführungen im Zusammenhang mit dem erfindungsgemäßen Verfahren und dessen vorteilhafter Ausgestaltungen verwiesen. Die Erfindung wird nachfolgend anhand von Ausführungsbeispielen näher erläutert; dabei zeigen beispielhaft
- Figur 1: ein Ausführungsbeispiel für eine Anordnung, die zur Durchführung eines erfindungsgemäßen Verfahrens geeignet ist,
- Figur 2: ein weiteres Ausführungsbeispiel für eine Anordnung, die zur Durchführung eines erfindungsgemäßen Verfahrens geeignet ist,
- Figur 3: eine Rechenanlage, in der die Schätzeinrichtung gemäß Figur 2 implementiert ist und die demgemäß die Schätzeinrichtung gemäß Figur 2 bildet,
- Fig. 4-6: weitere Ausführungsbeispiele für erfindungsgemäße Rechenanlagen, und
- Figur 7: ein Ausführungsbeispiel für ein erfindungsgemäßes Schienenfahrzeug und eine erfindungsgemäße Eisenbahnstreckeneinrichtung, die jeweils mit einer Rechenanlage, wie sie in den Figuren 3 bis 6 gezeigt ist, ausgestattet sind.

In den Figuren werden der Übersicht halber für identische oder vergleichbare Komponenten dieselben Bezugszeichen verwendet.

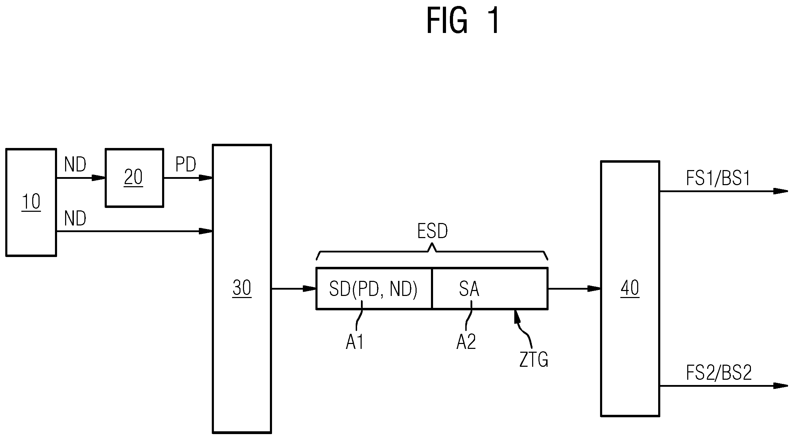

Die Figur 1 zeigt ein Ausführungsbeispiel für eine Anordnung, die zur Durchführung eines erfindungsgemäßen Verfahrens geeignet ist.

Die Anordnung umfasst ein Anwendungsmodul 10, mit dem Originalnutzdaten ND erzeugt werden. Bei den Originalnutzdaten ND handelt es sich vorzugsweise um Steuerdaten oder Steuerbefehle wie beispielsweise Fahr- oder Bremsbefehle für ein Schienenfahrzeug.

Dem Anwendungsmodul 10 nachgeordnet ist ein Prüfmodul 20, das mit den Originalnutzdaten ND Prüfdaten PD bildet. Die Prüfdaten PD können beispielsweise durch eine Kodierung der Originalnutzdaten ND gebildet werden und einen zyklischen Redundanzcode wie zum Beispiel einen CRC-Code umfassen.

Mit dem Anwendungsmodul 10 und dem Prüfmodul 20 steht ein Telegrammerzeugungsmodul 30 in Verbindung. Das Telegrammerzeugungsmodul 30 bildet ein Zwischentelegramm ZTG, das einen Nutzdatenabschnitt A1 und einen Sicherungsabschnitt A2 umfasst. Das Telegrammerzeugungsmodul 30 wird vorzugsweise durch eine flexible F-Link Telegrammsendeeinrichtung des SIMATIC Safety Systems der Fa. SIEMENS gebildet.

In den Nutzdatenabschnitt A1 des Zwischentelegramms ZTG werden als Nutzdateninhalt Sicherungsdaten SD eingefügt. Die Sicherungsdaten SD können allein mit den Originalnutzdaten ND gebildet werden und beispielsweise mit diesen identisch sein; alternativ können die Sicherungsdaten SD allein mit den Prüfdaten PD gebildet werden und beispielsweise mit den Prüfdaten PD identisch sein. Auch ist es möglich, dass die Sicherungsdaten SD sowohl die Originalnutzdaten ND als auch die Prüfdaten PD umfassen.

Darüber hinaus erzeugt das Telegrammerzeugungsmodul 30 einen Sicherungsanhang SA, den sie in den Sicherungsabschnitt A2 des Zwischentelegramms ZTG einfügt. Der Sicherungsanhang SA und die Sicherungsdaten SD bilden gemeinsam erweiterte Sicherungsdaten ESD, die - wie erläutert - in unterschiedlichen Abschnitten des Zwischentelegramms ZTG untergebracht werden.

Dem Telegrammerzeugungsmodul 30 nachgeordnet ist ein Telegrammempfangsmodul 40, zu dem das Zwischentelegramm ZTG weitergeleitet wird. Das Telegrammempfangsmodul 40 empfängt das von dem Telegrammerzeugungsmodul 30 erzeugte Zwischentelegramm ZTG und wertet die darin enthaltenen erweiterten Sicherungsdaten ESD aus. Das Telegrammempfangsmodul 40 wird vorzugsweise durch eine flexible F-Link Telegrammempfangseinrichtung des SIMATIC Safety Systems der Fa. SIEMENS gebildet.

Ausgangsseitig erzeugt das Telegrammempfangsmodul 40 ein Steuersignal in Form eines datentelegrammbezogenen Freigabesignals FS1, das ein Aussenden eines Datentelegramms freigibt, und/oder ein Steuersignal in Form eines speicherdatenbezogenen Freigabesignals FS2, das ein Speichern von Daten freigibt, wenn der Nutzdateninhalt des Zwischentelegramms ZTG und der im Sicherungsabschnitt A2 des Zwischentelegramms ZTG befindliche Sicherungsanhang SA inhaltlich korrespondieren (bzw. korrelieren, also inhaltlich zueinander passen).

Wenn der Nutzdateninhalt und der Sicherungsanhang SA nicht korrespondieren, so erzeugt das Telegrammempfangsmodul 40 ein datentelegrammbezogenes Blockiersignal BS1, das ein Aussenden des Datentelegramms DTG blockiert, und/oder ein speicherdatenbezogenes Blockiersignal BS2, das ein Speichern von Daten blockiert.

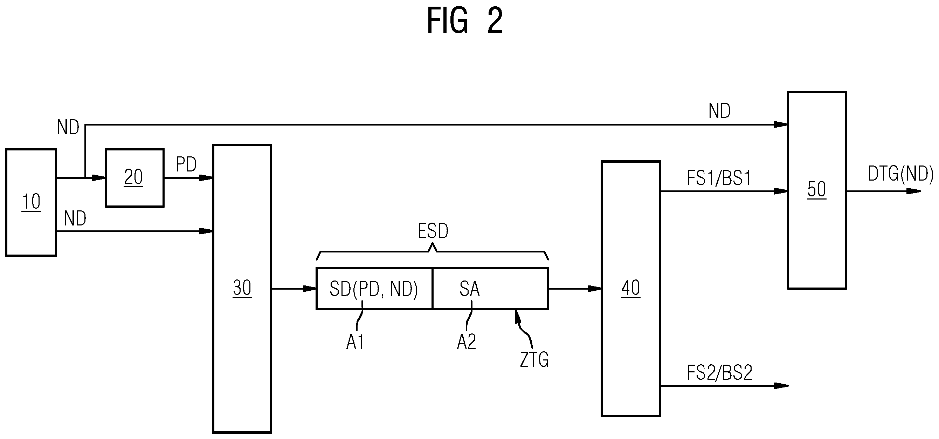

Die Figur 2 zeigt eine vorteilhafte Weiterbildung der Anordnung gemäß Figur 1. Die Anordnung gemäß Figur 2 umfasst zusätzlich eine Datentelegrammsendeeinrichtung 50, die zum Erzeugen und Senden eines Datentelegramms DTG dient. Das Aussenden des Datentelegramms DTG wird mit dem Freigabesignal FS1 freigegeben oder mit dem Blockiersignal BS1 blockiert.

Die Datentelegrammsendeeinrichtung 50 bildet das Datentelegramm DTG beispielsweise, indem sie die Originalnutzdaten ND zu einem Nutzdatenabschnitt des Datentelegramms DTG hinzugefügt.

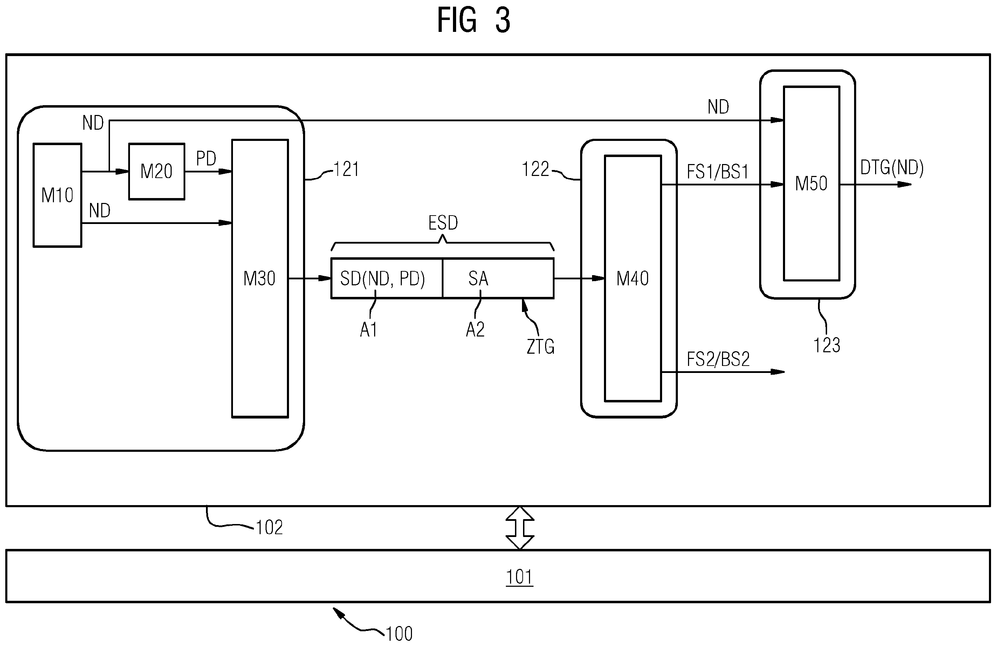

Die Figur 3 zeigt ein Ausführungsbeispiel für eine erfindungsgemäße Rechenanlage 100, die die Anordnung gemäß Figur 2 realisiert. Die Rechenanlage 100 umfasst eine Recheneinrichtung 101 und einen Speicher 102.

Die Recheneinrichtung 101 kann durch eine einzige Recheneinheit oder alternativ durch mehrere Recheneinheiten gebildet sein, die nahe nebeneinander oder getrennt voneinander angeordnet sein können.

Der Speicher 102 kann durch eine einzige Speichereinheit oder alternativ durch mehrere Speichereinheiten gebildet sein, die nahe nebeneinander oder getrennt voneinander angeordnet sein können.

In dem Speicher 102 sind ein Anwendungssoftwaremodul M10, das bei Ausführung durch die Recheneinrichtung 101 das Anwendungsmodul 10 bildet, ein Prüfsoftwaremodul M20, das bei Ausführung durch die Recheneinrichtung 101 das Prüfmodul 20 bildet, ein Telegrammerzeugungssoftwaremodul M30, das bei Ausführung durch die Recheneinrichtung 101 das Telegrammerzeugungsmodul 30 bildet, ein Telegrammempfangssoftwaremodul M40, das bei Ausführung durch die Recheneinrichtung 101 das Telegrammempfangsmodul 40 bildet, und ein Datentelegrammsoftwaremodul M50, das bei Ausführung durch die Recheneinrichtung 101 die Datentelegrammsendeeinrichtung 50 bildet.

Das Anwendungssoftwaremodul M10, das Prüfsoftwaremodul M20 und das Telegrammerzeugungssoftwaremodul M30 sind in einem gemäß einer vorgegebenen Sicherheitsnorm als sicher eingestuften Abschnitt 121 der Rechenanlage 100 angeordnet und führen ihre Verfahrensschritte unter Einhaltung der vorgegebenen Sicherheitsnorm durch.

Das Telegrammempfangssoftwaremodul M40 ist vorzugsweise in einem anderen, softwaremäßig getrennten und gemäß der vorgegebenen Sicherheitsnorm ebenfalls als sicher eingestuften Abschnitt 122 der Rechenanlage 100 angeordnet und führt seine Verfahrensschritte ebenfalls unter Einhaltung der vorgegebenen Sicherheitsnorm durch.

Das Datentelegrammsoftwaremodul M50 ist im Unterschied zu den genannten anderen Modulen M10, M20, M30 und M40 in einem - bezogen auf die genannte Sicherheitsnorm - nicht als sicher eingestuften Abschnitt 123 der Rechenanlage 100 angeordnet. Die Fertigstellung des Datentelegramms DTG und dessen Aussenden erfolgt also in einem hardware- und/oder softwaremäßig nichtsicheren Umfeld.

Im Übrigen gelten die obigen Ausführungen im Zusammenhang mit den Figuren 1 bis 2 bei dem Ausführungsbeispiel gemäß Figur 3 entsprechend.

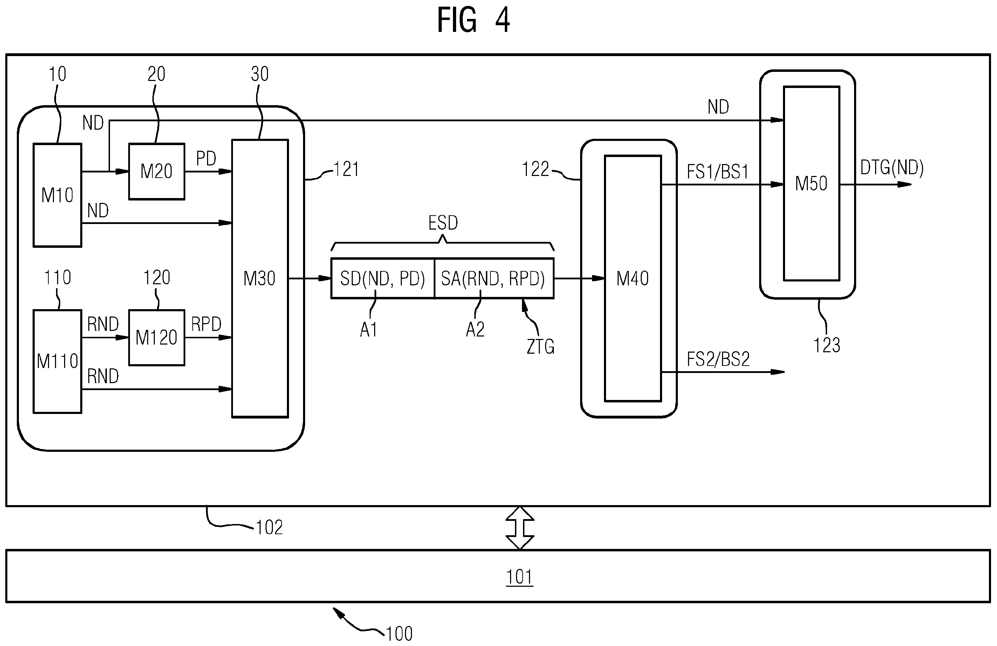

Die Figur 4 zeigt eine vorteilhafte Erweiterung des Ausführungsbeispiels gemäß Figur 3.

Die Anordnung gemäß Figur 4 umfasst zusätzlich ein Referenzanwendungssoftwaremodul M110, das bei Ausführung durch die Recheneinrichtung 101 ein Referenzanwendungsmodul 110 bildet und Referenznutzdaten RND erzeugt. Die Referenznutzdaten RND unterscheiden sich von den Originalnutzdaten ND des Anwendungsmoduls 10 nur formal (z. B. durch eine Kodierung oder ein anderes Datenformat), inhaltlich sind sie im fehlerfreien Falle aber mit den Originalnutzdaten ND identisch. Handelt es sich bei den Originalnutzdaten ND beispielsweise um Steuerdaten oder Steuerbefehle wie beispielsweise Fahr- und/oder Bremsbefehle für ein Schienenfahrzeug, so definieren die Referenznutzdaten RND dieselben Steuerdaten und dieselben Steuerbefehle wie die Originalnutzdaten ND.

Dem Referenzanwendungsmodul 110 nachgeordnet ist ein Referenzprüfsoftwaremodul M120, das bei Ausführung durch die Recheneinrichtung 101 ein Referenzprüfmodul 120 bildet und mit den Referenznutzdaten RND Referenzprüfdaten RPD erzeugt. Die Referenzprüfdaten RPD können beispielsweise durch eine Kodierung gebildet werden und einen zyklischen Redundanzcode wie zum Beispiel einen CRC-Code umfassen.

Bei dem Ausführungsbeispiel gemäß Figur 4 fügt das Telegrammerzeugungsmodul 30 die Originalnutzdaten ND und die Prüfdaten PD als Sicherungsdaten bzw. als Nutzinhalt in den Nutzdatenabschnitt A1 des Zwischentelegramms ZTG ein; alternativ kann es auf die Originalnutzdaten ND und die Prüfdaten PD zunächst eine Sicherungsfunktion anwenden und die in dieser Weise gesicherten Daten anschließend in den Nutzdatenabschnitt A1 des Zwischentelegramms ZTG einfügen.

Da das Telegrammerzeugungsmodul 30 eingangsseitig auch mit dem Referenzanwendungsmodul 110 und dem Referenzprüfmodul 120 verbunden ist, kann es den Sicherungsanhang SA für das Zwischentelegramm ZTG mit den Referenznutzdaten RND und den Referenzprüfdaten RPD bilden. Beispielsweise kann das Telegrammerzeugungsmodul 30 die Referenznutzdaten RND und die Referenzprüfdaten RPD als solche als Sicherungsanhang SA in den Sicherungsabschnitt A2 des Zwischentelegramms ZTG einfügen; alternativ kann es auf die Referenznutzdaten RND und die Referenzprüfdaten RPD zunächst eine Sicherungsfunktion anwenden und die in dieser Weise gesicherten Daten anschließend als Sicherungsanhang SA in den Sicherungsabschnitt A2 des Zwischentelegramms ZTG einfügen.

Das Telegrammempfangsmodul 40 empfängt das Zwischentelegramm ZTG und prüft, ob der auf den Originaldaten beruhende Nutzdateninhalt, der hier sowohl auf den Originalnutzdaten ND als auch auf den Prüfdaten PD beruht, mit dem referenzdatenbezogenen Sicherungsanhang SA, der hier sowohl auf den Referenznutzdaten RND als auch auf den Referenzprüfdaten RPD beruht, korrespondiert.

Die Prüfung, ob eine Korrelation bzw. ein Korrespondieren zwischen dem auf den Originaldaten beruhenden Nutzdateninhalt und dem referenzdatenbezogenen Sicherungsanhang SA vorliegt bzw. der Sicherungsanhang SA und der Nutzdateninhalt inhaltlich zusammenpassen, wird vorzugsweise in Abhängigkeit davon durchgeführt, wie der Nutzdateninhalt und der Sicherungsanhang SA erstellt worden sind: Ist beispielsweise der auf den Originaldaten beruhende Nutzdateninhalt unverschlüsselt und ist der referenzdatenbezogene Sicherungsanhang SA verschlüsselt, so kann der referenzdatenbezogene Sicherungsanhang SA zunächst entschlüsselt werden und es kann der unverschlüsselte Nutzdateninhalt mit dem entschlüsselten Sicherungsanhang inhaltlich verglichen werden und es kann auf eine Korrelation geschlossen werden, wenn der unverschlüsselte Nutzdateninhalt und der entschlüsselte Sicherungsanhang identisch sind. Alternativ kann der Nutzdateninhalt mit demselben Verschlüsselungsverfahren, mit dem auch der Sicherungsanhang SA erstellt wurde, oder mit einem im fehlerfreien Falle dasselbe Ergebnis liefernden anderen Verschlüsselungsverfahren verschlüsselt werden und es kann der verschlüsselte Nutzdateninhalt mit dem verschlüsselten Sicherungsanhang SA verglichen werden und auf eine Korrelation geschlossen werden, wenn der verschlüsselte Nutzdateninhalt und der verschlüsselte Sicherungsanhang identisch sind.

Falls der Nutzdateninhalt des Zwischentelegramms ZTG und der im Sicherungsabschnitt befindliche Sicherungsanhang SA korrespondieren, werden das datentelegrammbezogene Freigabesignal FS1 und/oder das speicherdatenbezogene Freigabesignal FS2 erzeugt; andernfalls werden das datentelegrammbezogene Blockiersignal BS1 und/oder das speicherdatenbezogene Blockiersignal BS2 erzeugt.

Im Übrigen gelten die obigen Erläuterungen im Zusammenhang mit den Figuren 1 bis 3 für das Ausführungsbeispiel gemäß Figur 4 entsprechend.

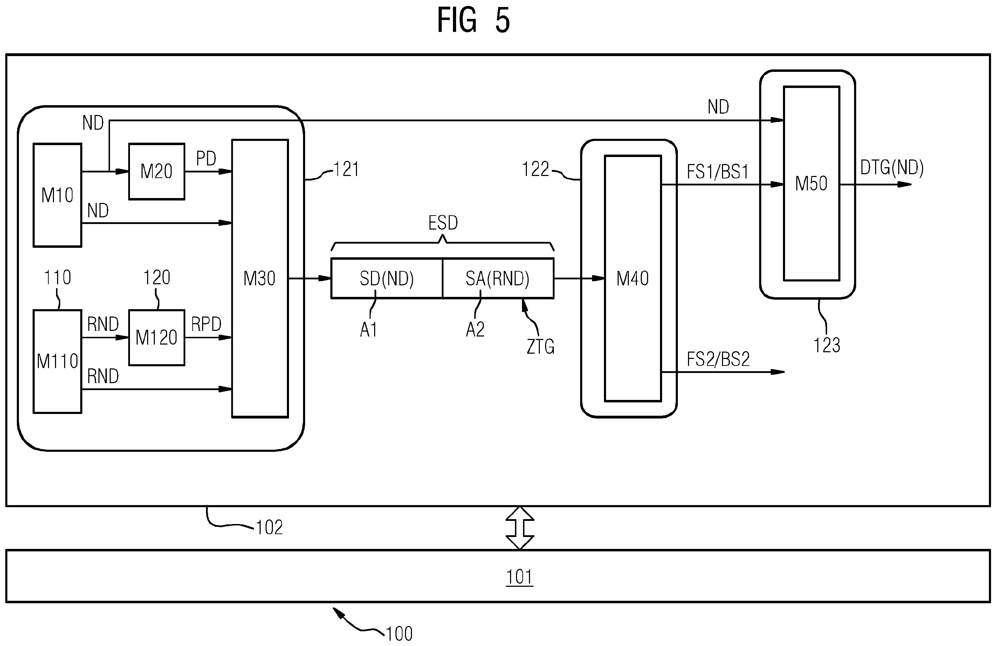

Die Figur 5 zeigt ein weiteres Ausführungsbeispiel für eine erfindungsgemäße Rechenanlage 100, die zum Erzeugen eines Steuersignals geeignet ist. Bei der Rechenanlage 100 gemäß Figur 5 fügt das Telegrammerzeugungsmodul 30 nur die Originalnutzdaten ND als Nutzinhalt in den Nutzdatenabschnitt A1 des Zwischentelegramms ZTG ein; alternativ kann sie auf die Originalnutzdaten ND zunächst eine Sicherungsfunktion anwenden und die in dieser Weise gesicherten Daten anschließend in den Nutzdatenabschnitt A1 des Zwischentelegramms ZTG einfügen.

Den Sicherungsanhang SA bildet das Telegrammerzeugungsmodul 30 nur mit den Referenznutzdaten RND, indem es beispielsweise diese als solche in den Sicherungsabschnitt A2 des Zwischentelegramms ZTG einfügt; alternativ kann es auf die Referenznutzdaten RND zunächst eine Sicherungsfunktion anwenden und die in dieser Weise gesicherten Daten anschließend als Sicherungsanhang SA in den Sicherungsabschnitt A2 des Zwischentelegramms ZTG einfügen.

Das Telegrammempfangsmodul 40 empfängt das Zwischentelegramm ZTG und prüft, ob der auf den Originaldaten beruhende Nutzdateninhalt, der hier allein auf den Originalnutzdaten ND beruht, mit dem referenzdatenbezogenen Sicherungsanhang SA, der hier nur auf den Referenznutzdaten RND beruht, korrespondiert.

Im Übrigen gelten die obigen Erläuterungen im Zusammenhang mit den Figuren 1 bis 4 für das Ausführungsbeispiel gemäß Figur 5 entsprechend.

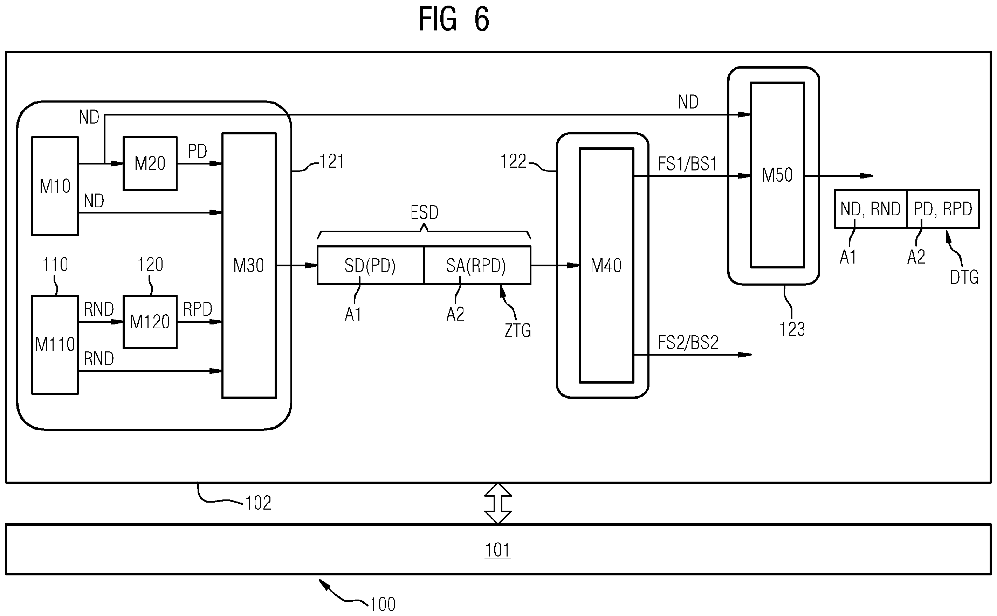

Die Figur 6 zeigt ein weiteres Ausführungsbeispiel für eine erfindungsgemäße Rechenanlage 100 zum Erzeugen eines Steuersignals.

Bei der Rechenanlage 100 gemäß Figur 6 fügt das Telegrammerzeugungsmodul 30 nur die Prüfdaten PD als Nutzinhalt in den Nutzdatenabschnitt A1 des Zwischentelegramms ZTG ein; alternativ kann es auf die Prüfdaten PD zunächst eine Sicherungsfunktion anwenden und die in dieser Weise gesicherten Daten anschließend in den Nutzdatenabschnitt A1 des Zwischentelegramms ZTG einfügen.

Den Sicherungsanhang SA bildet das Telegrammerzeugungsmodul 30 nur mit den Referenzprüfdaten RPD, indem es beispielsweise diese als solche in den Sicherungsabschnitt A2 des Zwischentelegramms ZTG einfügt; alternativ kann es auf die Referenzprüfdaten RPD zunächst eine Sicherungsfunktion anwenden und die in dieser Weise gesicherten Daten anschließend als Sicherungsanhang SA in den Sicherungsabschnitt A2 des Zwischentelegramms ZTG einfügen.

Das Telegrammempfangsmodul 40 empfängt das Zwischentelegramm ZTG und prüft, ob der auf den Originaldaten beruhende Nutzdateninhalt, der hier allein auf den Prüfdaten PD beruht, mit dem referenzdatenbezogenen Sicherungsanhang SA, der hier nur auf den Referenzprüfdaten RPD beruht, korrespondiert.

Im Übrigen gelten die obigen Erläuterungen im Zusammenhang mit den Figuren 1 bis 5 für das Ausführungsbeispiel gemäß Figur 6 entsprechend.

Bei den Ausführungsbeispielen gemäß den Figuren 4 bis 6 ist es vorteilhaft, wenn die Datentelegrammsendeeinrichtung 50 die Originalnutzdaten ND und/oder die Referenznutzdaten RND einem Nutzdatenabschnitt A1 des Datentelegramms DTG zufügt und die Prüfdaten PD und/oder die Referenzprüfdaten RPD einem Sicherungsabschnitt A2 des Datentelegramms DTG zufügt, wie beispielhaft die Figur 6 zeigt. In der Figur 6 fehlen aus Gründen der Übersicht Verbindungsleitungen, die die Übertragung der Referenznutzdaten RND, der Prüfdaten PD und der Referenzprüfdaten RPD zu der Datentelegrammsendeeinrichtung 50 ermöglichen.

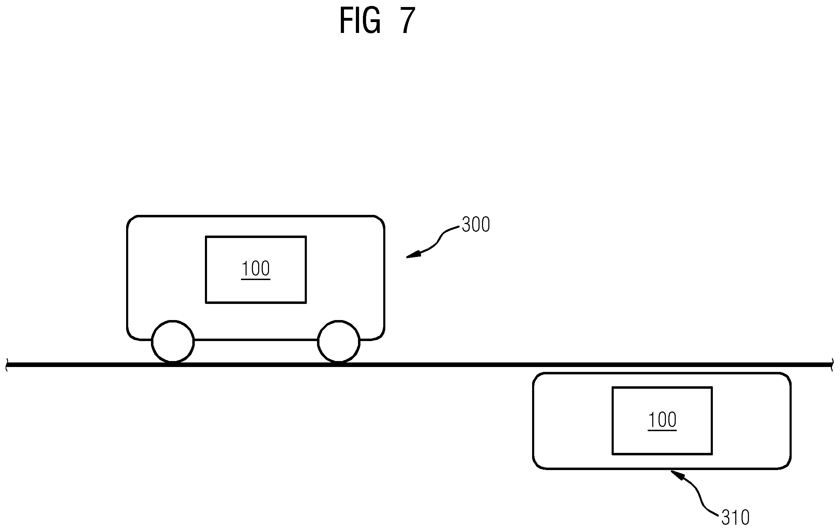

Die Figur 7 zeigt ein Ausführungsbeispiel für ein erfindungsgemäßes Schienenfahrzeug 300 und eine erfindungsgemäße Eisenbahnstreckeneinrichtung 310, die jeweils mit einer Rechenanlage 100, beispielsweise einer solchen, wie sie in den Figuren 3 bis 6 gezeigt ist, ausgestattet sind und jeweils erfindungsgemäße Verfahren ausführen können.

Die oben beispielhaft erläuterten Ausführungsbeispiele für erfindungsgemäße Verfahren und Rechenanlagen können - müssen aber nicht - ein oder mehr der nachfolgend stichpunktartig aufgeführten Merkmale, Vorteile oder Eigenschaften aufweisen:
- Die Ausführungsbeispiele können das SIMATIC Safety System einsetzen, das den sicheren Telegramm-Standard PROFIsafe verwendet.
- Die Telegrammerstellung erfolgt vorzugsweise in der oben beschriebenen Form auf Betriebssystemebene unter Kanalbeteiligung eines Referenzkanals (nachfolgend auch kodierter Kanal genannt) zur Erzeugung des Sicherungsanhangs.
- Für die Umsetzung von Telegrammprotokollen aus der Eisenbahnsicherungstechnik können spezielle Treiber auf Betriebssystemebene entwickelt werden.
- Die Flexible F-Link Kommunikation des SIMATIC Safety Systems kann zwischen zwei F-Ablaufgruppen die sichere Erzeugung und geschützte Speicherung von Daten sicherstellen.
- Beim Ausgeben eines Bits auf eine sichere Ausgabebaugruppe F-DO des SIMATIC Safety Systems werden vorzugsweise die Ergebnisse des Originalkanals und des kodierten Kanals (Referenzkanals) bei der Auswertung des PROFIsafe Telegramms sicher verglichen.
- Die komplette Erstellung des Telegramms (mit Sicherungsanhang) erfolgt vorzugsweise im sicheren Programmbereich des SIMATIC Safety Systems.
- Das erstellte Telegramm wird vorzugsweise mit der SIMATIC internen Kommunikationsfunktion "Flexible F-Link" (F-Link) an einen internen Empfangsbaustein übertragen. Der sichere Sendebaustein des F-Links überprüft vorzugsweise die Kanalbeteiligung des Coded-Programms (also des Referenzkanals) bei Erstellung des Telegramms und versendet vorzugsweise das Ergebnis in einem intern gesicherten Telegramm.
- Die Empfangsfunktion des F-Links überprüft vorzugsweise das empfangene Telegramm mit Hilfe der internen Telegrammsicherungsverfahren (u. a. F-Link CRC). Die F-Link Empfangsfunktion liefert der Anwendung eine sichere Statusmeldung.
- Die Statusmeldung der Empfangsfunktion wird vorzugsweise als Freigabe für die vollständige Bereitstellung des Sendetelegramms an das Standardprogramm genutzt.
- Zusätzlich wird die Statusmeldung vorzugsweise als sicheres Bit über die zweikanalige sichere Ausgabebaugruppe ausgegeben. Die Freigabe nach dem Vergleich oder im Fehlerfall die Blockierung des erstellten Telegramms kann (auch unter Verwendung der sicheren Ausgabefunktion) auf verschiedene Weise erfolgen, hierfür sind z. B. eine oder die Kombination mehrerer folgender Maßnahmen möglich:
   - Programmstopp und damit Erzwingen des sicheren Zustands im Fehlerfall.
   - Physikalische Freigabe/Sperren der Sendebaugruppe (z. B. stromlos Schalten); für dieses Verfahren sollte sichergestellt werden, dass die sichere Sperrung der Kommunikationsbaugruppe rechtzeitig vor Absenden eines potentiell gefährlichen Telegramms erfolgt.
   - Durch sicheres Wiedereinlesen des Freigabebits; das fertige Telegramm wird vorzugsweise erst nach vorhandener Freigabe in den nicht sicheren Programmteil zur Weitergabe an den Kommunikationsprozessor übergeben.
- Der Telegrammversand erfolgt vorzugsweise im Standardprogramm des Systems.
- Für das Erreichen des Sicherheitsziels kann es ausreichend sein, nur einen Teil des Telegramms (z. B. den Sicherheitsanhang) durch Versenden über den F-Link zu prüfen und die Freigabe nur hiervon abhängig zu machen.
- Es kann von Vorteil sein, wenn der Sicherungsanhang im Standard-Programm erstellt werden kann. Das vorab beschriebene Verfahren wird vorzugsweise nur auf den Telegrammteil, aus denen der Nutzdatenanteil berechnet wird (Header und Nutzdaten), aber nicht auf den Sicherungsanhang angewendet.
- Zwischen den Verfahrensschritten der F-Link Versendung und der F-Link Empfangsauswertung wird vorzugsweise aus dem durch das F-Link Verfahren gesicherten Header und Nutzdaten der Sicherungsanhang mit Standard Programmmitteln erstellt. Die Erstellung erfolgt vorzugsweise einkanalig und nicht sicher, aber auf Basis gesicherter Daten.
- Alternativ zum F-Link könnte auch ein anderes Verfahren mit vergleichbaren Eigenschaften genutzt werden.
- Die sichere Erzeugung des Telegramms wird vorzugsweise dadurch erreicht, dass die Kanalbeteiligung des codierten Programmteils (Referenzkanal) bei der Erstellung der Nutzdaten über die Verwendung des F-Links sichergestellt wird und so die korrekte Erstellung vor dem Versenden sichergestellt wird.
- Für die Umsetzung der Telegrammprotokolle (z. B. in der Eisenbahnsignaltechnik) ist kein Eingriff in die Betriebssystemebene eines Coded-Monoprozessors erforderlich. Eine damit verbundene Pflege der Tool-Kette und Systempflege des Basissystems kann entfallen.
- Vorzugsweise erfolgt eine Nutzung der SIMATIC internen Kommunikationsfunktion "Flexible F-Link" (F-Link), wobei das F-Link Protokoll vorzugsweise mit dem F-Link CRC geprüft wird.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder anderen Unteransprüchen, um weitere andere Ausführungsbeispiele zu erhalten.

## Patentansprüche

1. Verfahren zum Erzeugen eines Steuersignals, dass
- mit Originalnutzdaten (ND) und/oder auf den Originalnutzdaten (ND) beruhenden Prüfdaten (PD) Sicherungsdaten (SD) gebildet werden,
- ein Sicherungsanhang (SA) erzeugt und dieser den Sicherungsdaten (SD) unter Bildung erweiterter Sicherungsdaten (ESD) hinzugefügt wird,
- die erweiterten Sicherungsdaten (ESD) ausgewertet werden und
- das Steuersignal in Abhängigkeit davon erzeugt wird, ob der in den erweiterten Sicherungsdaten (ESD) enthaltene Sicherungsanhang (SA) mit den in den erweiterten Sicherungsdaten (ESD) enthaltenen Sicherungsdaten (SD) korreliert,
wobei die oben genannten Schritte in einem oder mehreren sicheren Abschnitten (121, 122) einer Rechenanlage (100) durchgeführt werden, und wobei
- ein Telegrammerzeugungsmodul (30) mit den erweiterten Sicherungsdaten (ESD) ein Zwischentelegramm (ZTG) bildet, das einen Nutzdatenabschnitt (A1) und einen Sicherungsabschnitt (A2) umfasst, wobei die Sicherungsdaten (SD) als Nutzdateninhalt dem Nutzdatenabschnitt (A1) zugefügt werden und der Sicherungsanhang (SA) dem Sicherungsabschnitt (A2) zugefügt wird,
- das Zwischentelegramm (ZTG) zu einem Telegrammempfangsmodul (40) weitergeleitet wird,
- das Telegrammempfangsmodul (40) das von dem Telegrammerzeugungsmodul (30) erzeugte Zwischentelegramm (ZTG) empfängt und die darin enthaltenen erweiterten Sicherungsdaten (ESD) auswertet und
- das Telegrammempfangsmodul (40) das Steuersignal in Abhängigkeit davon erzeugt, ob der Nutzdateninhalt und der Sicherungsanhang (SA) korrespondieren,
**dadurch gekennzeichnet, dass**
- das Telegrammerzeugungsmodul (30) und das Telegrammempfangsmodul (40) in dem oder den oben genannten sicheren Abschnitten (121, 122) der Rechenanlage (100) integriert sind,
- das Telegrammempfangsmodul (40) als das Steuersignal ein datentelegrammbezogenes Freigabesignal (FS1) erzeugt, das ein Aussenden eines Datentelegramms (DTG) freigibt, wenn der Nutzdateninhalt und der Sicherungsanhang (SA) korrespondieren, und
- das Telegrammempfangsmodul (40) als das Steuersignal ein datentelegrammbezogenes Blockiersignal (BS1) erzeugt, das ein Aussenden des Datentelegramms (DTG) blockiert, wenn der Nutzdateninhalt und der Sicherungsanhang (SA) nicht korrespondieren.

2. Verfahren nach Anspruch 1,
**dadurch gekennzeichnet, dass**
- das Telegrammempfangsmodul (40) als das Steuersignal oder als ein weiteres Steuersignal ein speicherdatenbezogenes Freigabesignal (FS2) erzeugt, das ein Speichern von Daten freigibt, wenn der Nutzdateninhalt und der Sicherungsanhang (SA) korrespondieren, und/oder
- das Telegrammempfangsmodul (40) als das Steuersignal oder als ein weiteres Steuersignal ein speicherdatenbezogenes Blockiersignal (BS2) erzeugt, das ein Speichern von Daten blockiert, wenn der Nutzdateninhalt und der Sicherungsanhang (SA) nicht korrespondieren.

3. Verfahren nach einem der voranstehenden Ansprüche,
**dadurch gekennzeichnet, dass**
- das Telegrammerzeugungsmodul (30) mit Referenznutzdaten (RND), die in dem sicheren Abschnitt (121, 122) oder einem der sicheren Abschnitte (121, 122) vorliegen und sich von den Originalnutzdaten (ND) unterscheiden und getrennt von den Originalnutzdaten (ND) erzeugt worden sind, aber im fehlerfreien Falle mit den Originalnutzdaten (ND) vom Dateninhalt her identisch sind, und/oder mit auf den Referenznutzdaten (RND) beruhenden Referenzprüfdaten (RPD) den Sicherungsanhang (SA) erzeugt und diesen referenzdatenbezogenen Sicherungsanhang (SA) dem Sicherungsabschnitt (A2) zufügt, und
- das Telegrammempfangsmodul (40) das Steuersignal oder zumindest eines der Steuersignale in Abhängigkeit davon erzeugt, ob der auf den Originalnutzdaten (ND) beruhende Nutzdateninhalt und der referenzdatenbezogene Sicherungsanhang (SA) korrespondieren.

4. Verfahren nach Anspruch 3,
**dadurch gekennzeichnet, dass**
das Telegrammerzeugungsmodul (30) die Originalnutzdaten (ND) und die Prüfdaten (PD) zu dem Nutzdatenabschnitt (A1) des Zwischentelegramms (ZTG) hinzufügt und den Sicherungsanhang (SA) durch Anwendung einer Sicherungsfunktion bildet, indem es die Sicherungsfunktion auf die Referenznutzdaten (RND) und die Referenzprüfdaten (RPD) anwendet.

5. Verfahren nach Anspruch 3,
**dadurch gekennzeichnet, dass**
das Telegrammerzeugungsmodul (30) die Originalnutzdaten (ND), aber nicht die Prüfdaten (PD), zu dem Nutzdatenabschnitt (A1) des Zwischentelegramms (ZTG) hinzufügt und den Sicherungsanhang (SA) durch Anwendung einer Sicherungsfunktion bildet, indem es die Sicherungsfunktion auf die Referenznutzdaten (RND) anwendet.

6. Verfahren nach Anspruch 3,
**dadurch gekennzeichnet, dass**
das Telegrammerzeugungsmodul (30) die Prüfdaten (PD), aber nicht die Originalnutzdaten (ND), zu dem Nutzdatenabschnitt (A1) des Zwischentelegramms (ZTG) hinzufügt und den Sicherungsanhang (SA) durch Anwendung einer Sicherungsfunktion bildet, indem es die Sicherungsfunktion auf die Referenzprüfdaten (RPD) anwendet.

7. Verfahren nach einem der voranstehenden Ansprüche,
**dadurch gekennzeichnet, dass**
- mit Referenznutzdaten (RND), die in dem sicheren Abschnitt (121, 122) oder in einem der sicheren Abschnitte (121, 122) vorliegen und sich von den Originalnutzdaten (ND) unterscheiden und getrennt von den Originalnutzdaten (ND) erzeugt worden sind, aber im fehlerfreien Falle mit den Originalnutzdaten (ND) vom Dateninhalt her identisch sind, und/oder mit auf den Referenznutzdaten (RND) beruhenden Referenzprüfdaten (RPD) der Sicherungsanhang (SA) erzeugt wird, und
- das Steuersignal in Abhängigkeit davon erzeugt wird, ob der auf den Originaldaten beruhende Nutzdateninhalt und der referenzdatenbezogene Sicherungsanhang (SA) korrespondieren.

8. Verfahren nach einem der voranstehenden Ansprüche,
**dadurch gekennzeichnet, dass**
die Anwendung der Sicherungsfunktion zumindest auch die Bildung eines zyklischen Redundanzcodes umfasst, der dem Sicherungsanhang (SA) zugefügt wird.

9. Verfahren nach einem der voranstehenden Ansprüche,
**dadurch gekennzeichnet, dass**
die Verfahrensschritte ausschließlich in einem oder mehreren durch Softwareprogrammierung und/oder Hardwaresicherung sicheren Abschnitten (121, 122) der Rechenanlage (100) ausgeführt werden.

10. Verfahren nach einem der voranstehenden Ansprüche,
**dadurch gekennzeichnet, dass**
die in den obigen Ansprüchen aufgeführten Verfahrensschritte auf zumindest zwei unabhängig voneinander sicher arbeitende Softwareabschnitte (21, 22) aufgeteilt sind.

11. Verfahren nach einem der voranstehenden Ansprüche 1 bis 10,
**dadurch gekennzeichnet, dass**
- das Datentelegramm (DTG), dessen Aussenden von dem Freigabesignal (FS1) freigegeben oder von dem Blockiersignal (BS1) blockiert wird, in einem nichtsicheren Abschnitt (123) der Rechenanlage (100) fertiggestellt wird,
- wobei die Originalnutzdaten (ND) und/oder die Referenznutzdaten (RND) einem Nutzdatenabschnitt (A1) des Datentelegramms (DTG) zugefügt werden, und
- wobei die Prüfdaten (PD) und/oder die Referenzprüfdaten (RPD) dem Sicherungsabschnitt (A2) des Datentelegramms (DTG) zugefügt werden.

12. Rechenanlage (100),
**dadurch gekennzeichnet, dass**
- die Rechenanlage (100) derart programmiert ist, dass sie ein Verfahren nach einem der voranstehenden Ansprüche ausführen kann,
- wobei zumindest die Verfahrensschritte, die in den Ansprüchen 1 bis 10 aufgeführt sind, sofern sie von der Rechenanlage (100) ausgeführt werden, ausschließlich in einem oder mehreren durch Softwareprogrammierung und/oder Hardwaresicherung sicheren Abschnitten (121, 122) der Rechenanlage (100) ausgeführt werden.

13. Eisenbahntechnische Komponente, insbesondere Schienenfahrzeug (300) oder Eisenbahnstreckeneinrichtung (310),
**dadurch gekennzeichnet, dass**
die eisenbahntechnische Komponente eine Rechenanlage (100) gemäß Anspruch 12 aufweist oder ein erfindungsgemäßes Verfahren nach einem der voranstehenden Ansprüche 1 bis 10 ausführen kann.

## Claims

1. Method for creating a control signal,
in which
- security data (SD) is formed with original payload data (ND) and/or check data (PD) based on the original payload data (ND),
- a security attachment (SA) is created and appended to the security data (SD) to form extended security data (ESD),
- the extended security data (ESD) is evaluated, and
- the control signal is created as a function of whether there is a correlation between the security attachment (SA) contained in the extended security data (ESD) and the security data (SD) contained in the extended security data (ESD),
wherein the above-cited steps are carried out in one or several secure sections (121, 122) of a computing system (100), and wherein
- a telegram creation module (30) with the extended security data (ESD) forms an intermediate telegram (ZTG) comprising a payload data section (A1) and a security section (A2), wherein the security data (SD) is appended as payload data content to the payload data section (A1) and the security attachment (SA) is appended to the security section (A2),
- the intermediate telegram (ZTG) is forwarded to a telegram receive module (40),
- the telegram receive module (40) receives the intermediate telegram (ZTG) created by the telegram creation module (30) and evaluates the extended security data (ESD) contained therein, and
- the telegram receive module (40) creates the control signal as a function of whether there is a correspondence between the payload data content and the security attachment (SA),
**characterised in that**
- the telegram creation module (30) and the telegram receive module (40) are integrated in the afore-cited secure section(s) (121, 122) of the computing system (100),
- the telegram receive module (40) creates as the control signal a data telegram-based release signal (FS1), which releases an emission of a data telegram (DTG) if there is a correspondence between the payload data content and the security attachment (SA), and
- the telegram receive module (40) creates as the control signal a data telegram-based blocking signal (BS1), which blocks an emission of the data telegram (DTG) if there is no correspondence between the payload data content and the security attachment (SA).

2. Method according to claim 1,
**characterised in that**
- the telegram receive module (40) creates as the control signal or as a further control signal a storage data-related release signal (FS2), which releases a storage of data if there is a correspondence between the payload data content and the security attachment (SA), and/or
- the telegram receive module (40) creates as the control signal or as a further control signal a storage data-related blocking signal (BS2), which blocks a storage of data if there is no correspondence between the payload data content and the security attachment (SA).

3. Method according to one of the preceding claims,
**characterized in that**
- the telegram creation module (30) creates the security attachment (SA) with reference payload data (RND) which is present in the secure section (121, 122) or one of the secure sections (121, 122) and differs from the original payload data (ND) and was created separately from the original payload data (ND) but in the error-free case is identical to the original payload data (ND) in terms of data content, and/or with reference check data (RPD) based on the reference payload data (RND), and appends said reference data-based security attachment (SA) to the security section (A2), and
- the telegram receive module (40) creates the control signal or at least one of the control signals as a function of whether there is a correspondence between the payload data content based on the original payload data (ND) and the reference data-based security attachment (SA).

4. Method according to claim 3,
**characterised in that**
the telegram creation module (30) appends the original payload data (ND) and the check data (PD) to the payload data section (A1) of the intermediate telegram (ZTG) and forms the security attachment (SA) by applying a security function, **in that** it applies the security function to the reference payload data (RND) and the reference check data (RPD).

5. Method according to claim 3,
**characterised in that**
the telegram creation module (30) appends the original payload data (ND), but not the check data (PD), to the payload data section (A1) of the intermediate telegram (ZTG) and forms the security attachment (SA) by applying a security function, **in that** it applies the security function to the reference payload data (RND).

6. Method according to claim 3,
**characterised in that**
the telegram creation module (30) appends the check data (PD), but not the original payload data (ND), to the payload data section (A1) of the intermediate telegram (ZTG) and forms the security attachment (SA) by applying a security function, **in that** it applies the security function to the reference check data (RPD).

7. Method according to one of the preceding claims,
**characterised in that**
- the security attachment (SA) is created with reference payload data (RND) which is present in the secure section (121, 122) or one of the secure sections (121, 122) and differs from the original payload data (ND) and was created separately from the original payload data (ND) but in the error-free case is identical to the original payload data (ND) in terms of data content, and/or with reference check data (RPD) based on the reference payload data (RND), and
- the control signal is created as a function of whether there is a correspondence between the payload data content based on the original data and the reference data-based security attachment (SA).

8. Method according to one of the preceding claims,
**characterised in that**
the application of the security function also comprises at least the formation of a cyclic redundancy code, which is appended to the security attachment (SA).

9. Method according to one of the preceding claims,
**characterised in that**
the method steps are carried out exclusively in one or several sections (121, 122) of the computing system (100) which are secure as a result of software programming and/or hardware security.

10. Method according to one of the preceding claims,
**characterised in that**
the method steps listed in the above claims are distributed over at least two software sections (21, 22) which work securely and are independent of one another.

11. Method according to one of the preceding claims 1 to 10,
**characterised in that**
- the data telegram (DTG), the emission of which is released by the release signal (FS1) or blocked by the blocking signal (BS1), is completed in a non-secure section (123) of the computing system (100),
- wherein the original payload data (ND) and/or the reference payload data (RND) is appended to a payload data section (A1) of the data telegram (DTG), and
- wherein the check data (PD) and/or the reference check data (RPD) is appended to the security section (A2) of the data telegram (DTG).

12. Computing system (100),
**characterised in that**
- the computing system (100) is programmed such that it can carry out a method according to one of the preceding claims,
- wherein at least the method steps listed in claims 1 to 10, insofar as they are carried out by the computing system (100), are carried out exclusively in one or several sections (121, 122) of the computing system (100) which are secure as a result of software programming and/or hardware security.

13. Railway engineering component, in particular rail vehicle (300) or railway trackside facility (310),
**characterised in that**
the railway engineering component has a computing system (100) according to claim 12 or can carry out a method in accordance with the invention according to one of the preceding claims 1 to 10.

## Revendications

1. Procédé de production d'un signal de commande,
dans lequel
- on forme des données (SD) de sécurisation avec des données (ND) utiles originales et/ou des données (PD) de contrôle reposant sur les données (ND) utiles originales,
- on produit une annexe (SA) de sécurisation et on l'ajoute aux données (SD) de sécurisation avec formation de données (ESD) de sécurisation étendues,
- on évalue les données (ESD) de sécurisation étendues et
- on produit le signal de commande en fonction du point de savoir, si l'annexe (SA) de sécurisation contenue dans les données (ESD) de sécurisation étendues est en corrélation avec les données (SD) de sécurisation contenues dans les données (ESD) de sécurisation étendues,
dans lequel on effectue les stades mentionnés ci-dessus dans une ou dans plusieurs parties (121, 122) sécurisées d'une installation (100) informatique, et dans lequel
- un module (30) de production de télégrammes forme avec les données (ESD) de sécurisation étendues un télégramme (ZTG) intermédiaire, qui comprend une partie (A1) de données utiles et une partie (A2) de sécurisation, dans lequel on ajoute les données (SD) de sécurisation comme contenu de données utiles à la partie (A1) de données utiles et on ajoute l'annexe (SA) de sécurisation à la partie (A2) de sécurisation,
- on achemine le télégramme (ZTG) intermédiaire à un module (40) de réception de télégrammes,
- le module (40) de réception de télégrammes reçoit le télégramme (ZTG) intermédiaire produit par le module (30) de production de télégrammes et évalue les données (ESD) de sécurisation étendues, qui y sont contenues et
- le module (40) de réception de télégrammes produit le signal de commande en fonction du point de savoir, si le contenu de données utiles et l'annexe (SA) de sécurisation se correspondent,
**caractérisé en ce que**
- le module (30) de production de télégrammes et le module (40) de réception de télégrammes sont intégrés dans la ou les parties (121, 122) sécurisées mentionnées ci-dessus de l'installation (100) informatique,
- le module (40) de réception de télégrammes produit comme signal de commande un signal (FS1) de validation rapporté au télégramme de données, qui valide un envoi d'un télégramme (DTG) de données, si le contenu de données utiles et l'annexe (SA) de sécurisation se correspondent, et
- le module (40) de réception de télégrammes produit comme signal de commande un signal (BS1) de blocage rapporté au télégramme de données, qui bloque un envoi du télégramme (DTG) de données, si le contenu de données utiles et l'annexe (SA) de sécurisation ne se correspondent pas.

2. Procédé suivant la revendication 1,
**caractérisé en ce que**
- le module (40) de réception de télégrammes produit comme signal de commande ou comme autre signal de commande un signal (FS2) de validation rapporté à des données de mémoire, qui valide une mise en mémoire de données, si le contenu de données utiles et l'annexe (SA) de sécurisation se correspondent, et/ou
- le module (40) de réception de télégrammes produit comme signal de commande ou comme autre signal de commande un signal (BS2) de blocage rapporté aux données de mémoire, qui bloque une mise en mémoire de données, si le contenu de données utiles et l'annexe (SA) de sécurisation ne se correspondent pas.

3. Procédé suivant l'une des revendications précédentes,
**caractérisé en ce que**
- le module (30) de production de télégrammes produit avec des données (RND) utiles de référence, qui se trouvent dans la partie (121, 122) de sécurisation ou dans l'une des parties (121, 122) de sécurisation et se distinguent des données (ND) utiles originales et ont été produites séparément des données (ND) utiles originales mais qui, s'il n'y a pas d'erreur, sont du point de vue du contenu des données identiques aux données (ND) utiles originales, et/ou avec des données (RPD) de contrôle de référence reposant sur des données (RND) utiles de référence, l'annexe (SA) de sécurisation, et ajoute cette annexe (SA) de sécurisation rapportée aux données de référence à la partie (A2) de sécurisation, et
- le module (40) de réception de télégrammes produit le signal de commande ou du moins l'un des signaux de commande en fonction du point de savoir, si le contenu de données utiles reposant sur les données (ND) utiles originales et l'annexe (SA) de sécurisation rapportée aux données de référence se correspondent.

4. Procédé suivant la revendication 3,
**caractérisé en ce que**
le module (30) de production de télégrammes ajoute les données (ND) utiles originales et les données (PD) de contrôle à la partie (A1) de données utiles du télégramme (ZTG) intermédiaire et forme l'annexe (SA) de sécurisation en appliquant une fonction de sécurisation, par le fait que la fonction de sécurisation est appliquée aux données (RND) utiles de référence et aux données (RPD) de contrôle de référence.

5. Procédé suivant la revendication 3,
**caractérisé en ce que**
le module (30) de production de télégrammes ajoute les données (ND) utiles originales, mais non les données (PD) de contrôle, à la partie (A1) de données utiles du télégramme (ZTG) intermédiaire, et forme l'annexe (SA) de sécurisation en appliquant une fonction de sécurisation par le fait qu'il applique la fonction de sécurisation aux données (RND) utiles de référence.

6. Procédé suivant la revendication 3,
**caractérisé en ce que**
le module (30) de production de télégrammes ajoute les données (PD) de contrôle, mais non des données (ND) utiles originales, à la partie (A1) de données utiles du télégramme (ZTG) intermédiaire et forme l'annexe (SA) de sécurisation en appliquant une fonction de sécurisation par le fait qu'il applique la fonction de sécurisation aux données (RPD) de contrôle de référence.

7. Procédé suivant l'une des revendications précédentes,
**caractérisé en ce que**
- l'on produit l'annexe (SA) de sécurisation, par des données (RND) utiles de référence, qui se trouvent dans la partie (121, 122) de sécurisation ou dans l'une des parties (121, 122) de sécurisation et qui se distinguent des données (ND) utiles originales et ont été produites séparément des données (ND) utiles originales, mais qui, quand il n'y a pas d'erreur, sont du point de vue du contenu des données, identiques aux données (ND) utiles originales et/ou avec des données (RPD) de contrôle de référence reposant sur les données (RND) utiles de référence, et
- on produit le signal de commande en fonction du point de savoir, si le contenu de données utiles reposant sur les données originales et l'annexe (SA) de sécurisation rapporté aux données de référence se correspondent.

8. Procédé suivant l'une des revendications précédentes,
**caractérisé en ce que**
l'application de la fonction de sécurisation comprend au moins également la formation d'un code de redondance cyclique, que l'on ajoute à l'annexe (SA) de sécurisation.

9. Procédé suivant l'une des revendications précédentes,
**caractérisé en ce que**
l'on exécute les stades du procédé exclusivement dans une ou plusieurs parties (121, 122), sécurisées par programmation logiciel et/ou par sécurisation matérielle, de l'installation (100) informatique.

10. Procédé suivant l'une des revendications précédentes,
**caractérisé en ce que**
l'on répartit les stades de procédé exécutés dans les revendications précédentes sur au moins deux parties (21, 22) logicielles opérant de manière sûre indépendamment l'une de l'autre.

11. Procédé suivant l'une des revendications 1 à 10 précédentes,
**caractérisé en ce que**
- l'on met finalement le télégramme (DTG) de données, dont l'envoi est validé par le signal (FS1) de validation ou est bloqué par le signal (BS1) de blocage, dans une partie (123) non sécurisée de l'installation (100) informatique,
- dans lequel on ajoute les données (ND) utiles originales et/ou les données (RND) utiles de référence à une partie (A1) de données utiles du télégramme (DTG) de données, et
- dans lequel on ajoute les données (PD) de contrôle et/ou les données (RPD) de contrôle de référence à la partie (A2) de sécurisation du télégramme (DTG) de données.

12. Installation (100) informatique,
**caractérisée en ce que**
- l'installation (100) informatique est programmée, de manière à pouvoir exécuter un procédé suivant l'une des revendications précédentes,
- dans lequel on exécute au moins les stades de procédé, qui sont mentionnés dans les revendications 1 à 10, dans la mesure où ils sont exécutés par l'installation (100) informatique, exclusivement dans des parties (121, 122), sécurisées par programmation logicielle et/ou sécurisation matérielle, de l'installation (100) informatique.

13. Composant de la technique des chemins de fer, en particulier véhicule (300) ferroviaire ou dispositif (310) de voie de chemin de fer,
**caractérisé en ce que**
le composant de la technique des chemins de fer a une installation (100) informatique suivant la revendication 12 ou peut exécuter un procédé suivant l'invention, suivant l'une des revendications 1 à 10 précédentes.
